# EUROPEAN PATENT APPLICATION

(11) **EP 0 529 762 A2**
(43) Date of publication of application: **03.03.1993**
(21) Application number: 92302861.7
(22) Date of filing: 01.04.1992
(51) Int. Cl.: G11B 17/22

(54) **Disk player**

(30) Priority: 26.08.1991 JP 213725/91
(71) Applicant: PIONEER ELECTRONIC CORPORATION, Meguro-ku Tokyo (JP)
(72) Inventor: Yagi, Akiharu, c/o Pioneer Electronic Corp., Tokorozawa-shi, Saitama (JP); Matsumoto, Keiichi, c/o Pioneer Electronic Corp., Tokorozawa-shi, Saitama (JP)
(74) Representative: Jackson, Peter Arthur

(57) **Abstract**

A disk player includes a main tray (3) which can be horizontally moved into or out of a housing; subtrays each of which is to be placed on the main tray in such a manner as to be movable relative to the main tray; an accommodating section for accommodating the subtrays in a stacked manner; a conveying member 6 which is movable to a subtray relative to the main tray; and at least one disk playing section (2) for playing a disk disposed on the subtray which is conveyed by the conveying member.

## Description

This invention relates to a disk player in which a plurality of disks are accommodated, and a desired one of the disks is played.

A disk player in which a plurality of disks are accommodated or housed, and a desired one of the disks is played, has been disclosed, for instance, in Japanese Patent Application (OPI) No. 256968/1985 (the term "OPI" as used herein means an "unexamined published application").

The conventional disk player includes a disk playing section for playing a disk; an accommodating section for accommodating a plurality of disks; and conveying means for conveying a disk from the accommodating section to the disk playing section.

In the above-described conventional disk player, only the disks in the accommodating section can be played. Hence, in order to play a disk other than those in the accommodating section, such a disk must first be set in the accommodating section, and then conveyed from the accommodating section to the disk playing section by the conveying means.

In order to place a disk or disks in the accommodating section or to replace the disk or disks in the accommodating section, it is necessary to expose the accommodating section by opening the door of the housing. In this disk replacing operation, in order to set the disks correctly, it is essential to confirm the addresses of the disk accommodating positions in the accommodating section where the disks are to be set; otherwise, the address specified for selecting a desired disk to be played may differ from the address of the disk accommodation position where the desired disk is actually located.

Accordingly, an object of this invention is to eliminate the above-described difficulties accompanying a conventional disk player adapted to play disks accommodated therein. More specifically, an object of the invention is to provide a disk player in which disks other than those accommodated in the disk accommodating section can be played, and in which it is not necessary to expose the disk accommodating section when the disks are to be accommodated or to be replaced.

These and other objects are accomplished by the present invention which provides a disk player including a housing, at least one disk playing section for playing a disk, a main tray which is movable into and out of the housing, subtrays which are movable relative to the main tray, an accommodating section for accommodating a plurality of subtrays in a stacked manner, and a conveying member for conveying a subtray to and from the main tray, the at least one disk playing section and the accommodating section.

In the accompanying drawings:
Fig. 1 is a perspective view showing an embodiment of a disk player according to the present invention.
Fig. 2 is a perspective view showing a main tray and a subtray according to the embodiment of Fig. 1.
Fig. 3 is a block diagram showing the control system of the disk player shown in Fig. 1.

A detailed description of an embodiment of the invention will now be described with reference to the accompanying drawings.

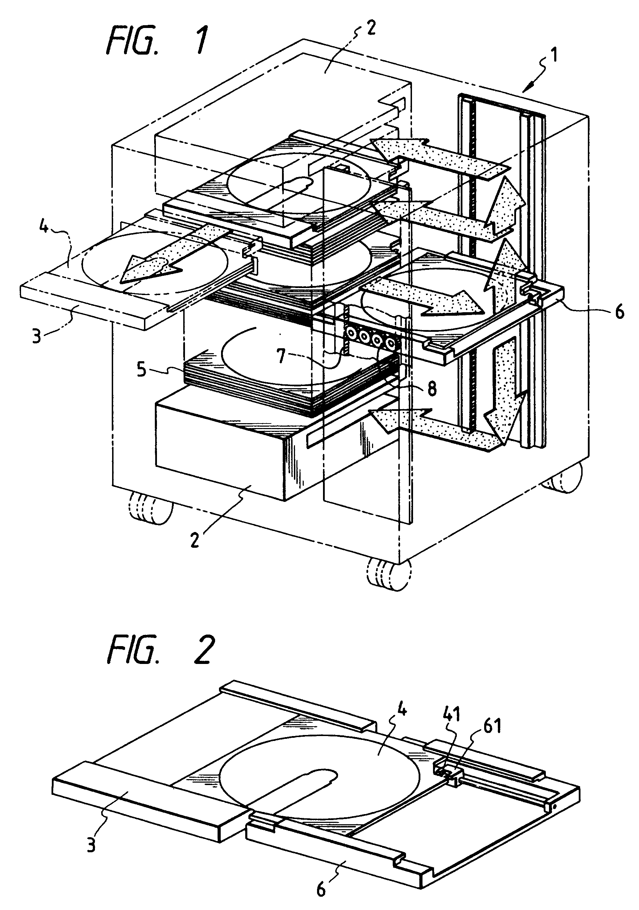

Fig. 1 is a perspective view showing the disk player according to the invention. As shown in Fig. 1, the disk player includes a housing 1; a pair of disk playing sections 2 provided at top and bottom positions in the housing 1, respectively; a main tray 3 which can be moved horizontally into or out of the housing 1; subtrays 4 which are movable relative to the main tray 3; an accommodating section 5 for accommodating subtrays 3 in a stacked manner; and a conveying member 6 which is movable in a direction in which the subtrays 3 are moved so as to be accommodated, thus conveying the subtrays.

Electric motors for producing drive forces to move the main tray 3, the subtrays 4 and the conveying member 6, and transmission means for transmitting the drive forces are not shown in Fig. 1. However, those skilled in the art will readily understand that motors, gears, racks, pinions, cams, etc. can be suitably combined to drive the main tray 3, the subtrays 4 and the conveying member 6 as required.

For example, the conveying member 6 may be provided with a drive motor disposed below thereof. The drive motor rotates a pinion 8 engaged with a rack 7, as shown in Fig. 1. As a result of this engagement, the conveying member 6 is moved vertically along the rack 7 as shown by the vertical arrows of Fig. 1. In order to position the conveying member 6 in a vertical direction, positioning means, such as a number of slits, is provided in a direction of the conveying movement, along with a photo sensor for the conveying member 6. The photo sensor counts the slits which it crosses while the conveying member 6 is being moved, and the conveying member 6 is positioned according to the counted value.

Alternatively, the above-described conveying member positioning means may be replaced by the following positioning means: Addresses corresponding to the positions of the subtrays in the accommodating section 5 and the positions of the main trays 3 are provided in a direction of movement of the conveying member 6 so that the addresses can be optically detected. The addresses thus provided are read with an optical sensor provided for the conveying member 6, thereby positioning the conveying member 6.

The main tray 3 and the subtray 4 are shown in more detail in Fig. 2. Specifically, the subtray 4 is movable relative to the main tray 3. In the embodiment, the subtray 4 is moved in a direction perpendicular to the direction of movement of the main tray 3. The subtray 4 is moved into or out of the main tray 3 by the conveying member 6.

Each subtray 4 has a protrusion 41 at a corner thereof which is extended in the direction of movement of the main tray 3. When the subtrays 4 are in the accommodating section 5, on the main tray 3, or in the disk playing section 2, the protrusions 41 of all the subtrays 4 are in vertical alignment with one another. On the other hand, the conveying member 6 has a U-shaped moving member 61 which is movable back and forth in the directions of movement of the subtray 4. The moving member 61 is adapted to engage with the protrusion 41 of the subtray 4. Hence, as the moving member 61 is moved by a motor (not shown), the subtray 4 (protrusion 41) engaged with moving member 61 is moved horizontally.

In the embodiment, two disk playing sections 2 are provided. The disk playing sections 2 have substantially the same mechanism as that of a conventional video disk player. However, it should be noted that, in the embodiment, in order to play a desired one of the two sides of a disk, the disk player is so designed that the pickup is movable over both recording surfaces of the disk. That is, the disk player is a double-sided playing type disk player as disclosed in, for example, Japanese Patent Application (OPI) No. 66779/1990.

In the accommodating section 5, a plurality of subtrays 4 are stacked in such a manner that they are movable horizontally. Each of the subtrays is moved in and out of the accommodating section 5 by the conveying means 6 similarly as in the case where each subtray is moved in and out of the main tray 3.

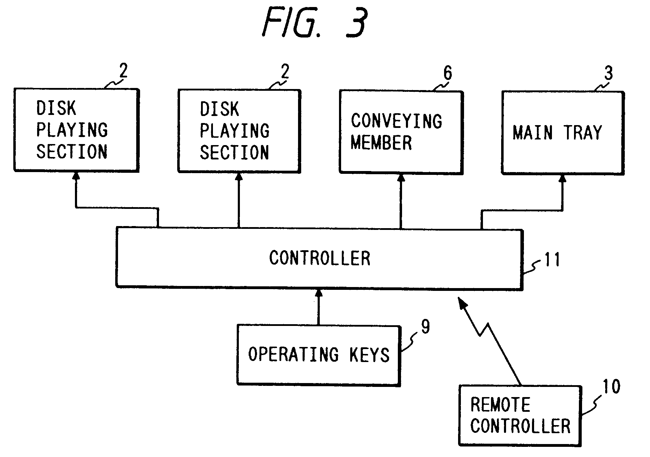

Fig. 3 is a block diagram showing the operational relationships between the above-described components forming the disk player and a controller 11 for controlling the operation of these components. In Fig. 3, the controller 11 may be a microcomputer which is provided with operating keys 9 and remote controls 10 disposed on the housing 1. The operating keys 9 and the remote controls 10 are operated to produce control signals for operating the disk playing sections 2, the conveying member 6, and the main tray 3. The main tray 3 is loaded or ejected by a loading mechanism (not shown) which is also controlled by controller 11.

The operation of the disk player according to the invention will now be described. The first operation described will be that of playing a disk which is not accommodated in the disk player.

First, the operator operates the operating keys 9 or remote controls 10 in order to enter an ejection instruction. In response to the entered ejection instruction, the controller 11 applies an instruction to the loading mechanism so that the main tray 3 is ejected out of the housing 1 with the subtray 4 disposed thereon.

Under this condition, the operator places a disk on the ejected subtray 4, and then enters a loading instruction via keys 9 or remote controls 10. In response to the entered loading instruction, the main tray 3 is moved by the loading mechanism into the housing 1 under the control of the controller 11.

Thereafter, the controller 11 applies an instruction signal to the conveying member 6 so that the conveying member 6 operates as follows: The conveying member 6 moves along the rack 7 to the main tray 3 (which has been loaded into the housing 1), and displaces the subtray 4 (containing the disk) with respect to the main tray 3 and places the subtray 4 (and disk) onto itself, i.e., onto the conveying member 6.

The subtray 4 thus placed on the conveying member 6 is moved to one of the disk playing sections 2, where the disk disposed on the subtray 4 is played.

It should be noted that while a first disk is being played by one of the disk playing sections 2, a second disk on a subtray 4 accommodated in the accommodating section 5 can be held in the other disk playing section 2 so that the second disk is played in succession with the first disk.

The subtray 4 being played is located in the disk playing section 2, and the protrusion 41 formed at the corner of the subtray 4 is in alignment with those protrusions 41 of the other subtrays 4 in the accommodating section. Hence, the conveying member 6 can move the subtray 4 into the disk playing section 2 and can move the subtray 4 vertically, as shown by the arrows in Fig. 1.

Therefore, when disposed at the position of another subtray 4 in the accommodating section 5, the conveying member 6 drives the moving member 61, and that subtray 4 is pulled out and placed on the conveying member 6. Thereafter, the conveying member 6 operates to convey the subtray 4 into the other disk playing section 2.

The protrusion 41 of each of the subtrays 4 is extended in the direction of movement of the main tray 3, and therefore the vertical movement of the conveying member 6 and the horizontal movement the main tray 3 never interfere with each other. Hence, even while the conveying member 6 is being moved vertically to reach a desired or selected subtray 4, the main tray 3 can be ejected or loaded.

The operation of replacing a disk on the subtray 4 which is in the accommodating section 5 will now be described.

The aforementioned operating keys 9 includes an operating key for specifying a disk replacing mode, and an operating key for specifying the address of a subtray 4 on which a disk for replacement is placed in the accommodating section 5. Upon selection of the disk replacing mode, the controller 11 applies a control signal to the conveying member 6. In response to the control signal, the conveying member 6 removes the subtray 4 from the main tray 3, and conveys it to a stand-by position provided outside the accommodating section 5. Under this condition, no subtray 4 is placed on the main tray 3 which is held inside the housing. The stand-by position may be provided at any position in the housing 1 which is outside of the accommodating section 5. For example, the disk playing section 2 may be utilized as the stand-by position. In this case, no additional space is necessary for the stand-by position, thereby reducing the required size of the disk player.

Thereafter, the controller 11 operates to move the conveying member 6 to a desired or selected subtray 4 in the accommodating section which has been specified by the operator. The conveying member 6 pulls the desired subtray 4 out of the accommodating section 5, and conveys the subtray 4 thus pulled out to the main tray 3. When the subtray 4 has been placed on the main tray 3, the controller 11 applies an instruction to the loading mechanism to eject the main tray 3 having the subtray 4 thereon.

After the main tray 3 has been ejected, the operator replaces the disk, and enters a loading instruction via operating keys 9 or remote controller 10. In response to the loading instruction, the controller 11 applies an instruction to the loading mechanism such that the main tray 3 is loaded inside of the housing 1. Thereafter, the controller 11 controls the conveying member 6 to remove the subtray 4 from the main tray 3, and returns the subtray 4 to its original position in the accommodating section 5. Under this operation, no subtray 4 is provided on the main tray 3. Therefore, the controller 11 operates to apply an instruction to the conveying member 6 so that the conveying member 6 operates to move the subtray 4 to the main tray 3 which has been held at the stand-by position outside of the accommodating section 5 (or the disk playing section 2).

As is apparent from the above description, the disks are accommodated or replaced by using the main tray 3, and therefore it is not necessary to open the door of the housing 1 to expose the accommodating section 5.

The position of the desired subtray 4 in the accommodating section 5 can be specified by operating the operating keys 9, and the conveying means 6 is allowed to make access to the position of the desired subtray by the positioning means under the control of the controller 11. Thus, the disk can be correctly set at the desired address in the accommodating section 5.

In the above-described embodiment, optical video disks are employed; however, the invention is not limited thereto or thereby. That is, the technical concept of the invention is applicable to a disk player for other disks such as compact disks.

## Claims

1. A disk player comprising:
a housing;
a main tray which is horizontally movable into and out of said housing;
an accommodating section, disposed in said housing, for accommodating a plurality of subtrays;
a conveying member movable in horizontal and vertical directions within said housing; and
at least one disk playing section disposed in said housing for playing a disk disposed on a subtray;
said conveying member operable for transferring a subtray to and from said main tray, said accommodating section and said at least one disk playing section.

2. The disk player as defined in claim 1, further comprising a controller for controlling an operation of said at least one playing section, said main tray and said conveying member.

3. The disk player as defined in claim 2, further comprising an input device, coupled to said controller, for inputting information to said controller.

4. The disk player as defined in claim 3, wherein said input device is one of an operating key pad and a remote controller.

5. The disk player as defined in claim 3, wherein said input device inputs information to said, controller representing a playing mode for playing a disk which is not accommodated in said accommodating section.

6. The disk player as defined in claim 3, wherein said controller in response to the inputted information representing the playing mode controls said main tray to move horizontally out of said housing.

7. The disk player as defined in claim 6, wherein said controller, in response to further information representing the playing mode, controls said main tray to move horizontally into said housing, and controls said conveying member to transfer a subtray located on said main tray which has been moved into said housing to said at least one playing section.

8. The disk player as defined in 3, wherein said input device inputs a sequence of information representing a replacement mode, and said controller in response to the inputted information representing the replacement mode controls said conveying member to transfer one of said plurality of subtrays accommodated in a first location of said accommodating section to said main tray, controls said main tray to move horizontally out of said housing so that a new disk can be placed on the subtray disposed on the main tray, said controller controls the main tray containing the subtray having the new disk to move horizontally into said housing, and said controller controls said conveying member to transfer the subtray having the new disk to said first position of said accommodating section.

9. The disk player as defined in claim l, further comprising a rack and a pinion for moving said conveying member vertically within said housing.

10. The disk player as defined in claim 1, wherein each of said subtrays includes a protrusion, and wherein said conveyor member includes a moving member for engaging said protrusion.

11. The disk player as defined in claim 10, wherein said moving member as a U-shape.

12. The disk player as defined in claim 10, wherein said moving member is movable relative to said conveyor member.

13. The disk player as defined in claim 1, wherein said plurality of subtrays accommodated in said accommodating section is disposed in a stacked manner.
